**Europäisches Patentamt**

**European Patent Office**

**Office européen des brevets**

(11) Veröffentlichungsnummer: **0 089 531**
**B1**

# (12) EUROPÄISCHE PATENTSCHRIFT

(45) Veröffentlichungstag der Patentschrift:
08.01.86

(21) Anmeldenummer: 83102163.9

(22) Anmeldetag: 04.03.83

(51) Int. Cl.⁴: **C 02 F 1/00**, C 02 F 1/68,
B 01 F 5/12

(54) Dosiergerät.

(30) Priorität: 24.03.82 DE 3210839

(43) Veröffentlichungstag der Anmeldung:
28.09.83 Patentblatt 83/39

(45) Bekanntmachung des Hinweises auf die Patenterteilung:
08.01.86 Patentblatt 86/2

(84) Benannte Vertragsstaaten:
AT BE CH DE FR GB IT LI NL SE

(56) Entgegenhaltungen:
DE - B - 1 802 844
DE - U - 7 615 753
GB - A - 455 241
GB - A - 602 666
US - A - 2 065 583
US - A - 2 958 334

(73) Patentinhaber: **Grünbeck Wasseraufbereitung GmbH,
Industriestr. 1, D-8884 Höchstädt (DE)**

(72) Erfinder: **Arens, Hans, Uhlandweg 6, D-8857 Wertingen
(DE)**

(74) Vertreter: **Prüfer, Lutz H., Dipl.-Phys., Harthauser
Strasse 25d, D-8000 München 90 (DE)**

ACTORUM AG

## Beschreibung

Die Erfindung betrifft ein Dosiergerät nach dem Oberbegriff des Patentanspruchs 1. Ein derartiges Dosiergerät wird insbesondere zur Wasseraufbereitung verwendet, wobei Dosiermittel aus einem Dosiermittelbehälter einem strömenden Medium zugesetzt wird.

Ein Dosiergerät der oben genannten Art ist aus der GB-A-45241 bekannt. Dabei wird der Dosiermittelbehälter mit Hilfe von Bändern an einem Rohr befestigt. Zum Auswechseln müssen zunächst die Bänder gelöst werden, worauf der alte Dosiermittelbehälter entfernt und ein neuer an seine Stelle gebracht werden kann. Zur Befestigung des neuen Dosiermittelbehälters muss jedoch sowohl dieser gehalten als auch die Haltebänder über diesen geschoben und befestigt werden, was den Auswechselvorgang erschwert und die Gefahr des Verschüttens von Dosiermittel erhöht.

Aus der US-A-2958334 ist eine Halterung für einen Dosiermittelbehälter bekannt, die als ein Korb ausgebildet ist, in den der Dosiermittelbehälter einsetzbar ist. Der Korb ist an einem Behälter in einer unveränderlichen Höhe aufgehängt.

Zum Auswechseln muss zunächst das Ansaugrohr aus dem Dosiermittelbehälter herausgezogen werden, worauf der Dosiermittelbehälter nach oben aus dem Korb herausgenommen werden kann. Nach dem Einsetzen eines neuen Dosiermittelbehälters in den Korb muss das Ansaugrohr wieder in den Dosiermittelbehälter eingeführt werden.

Aufgabe der Erfindung ist es, ein Dosiergerät der eingangs beschriebenen Art zu schaffen, bei welchem das Auswechseln des Dosiermittelbehälters wesentlich vereinfacht ist. Gemäss einer Weiterbildung der Erfindung soll die Ausbildung so erfolgt sein, dass beim Auswechseln des Dosiermittelbehälters ein Verschmutzen des Bodens vermieden wird.

Diese Aufgabe wird durch ein Dosiergerät der gattungsgemässen Art gelöst, welches durch die Merkmale des kennzeichnenden Teiles des Anspruches 1 gekennzeichnet ist.

Weitere Merkmale und Zweckmässigkeiten der Erfindung ergeben sich aus der Beschreibung eines Ausführungsbeispiels anhand der Figuren. Von den Figuren zeigen:

Fig. 1 eine schematische Seitenansicht eines Dosiergerätes mit eingesetztem Dosiermittelbehälter in der Gebrauchsstellung;

Fig. 2 die in Fig. 1 gezeigte Vorrichtung in einer Stellung, in der der Dosiermittelbehälter auswechselbar ist;

Fig. 3 eine perspektivische Darstellung eines Details der Vorrichtung in grösserem Massstab;

Fig. 4 einen Schnitt durch den in Fig. 3 gezeigten Teil entlang der Linie IV-IV in Fig. 1, und

Fig. 5 einen Schnitt durch den in Fig. 4 gezeigten Teil entlang der Linie V-V in Fig. 4.

Das Dosiergerät 1 weist in üblicher Weise eine schematisch dargestellte Pumpe 2 mit einem Antrieb auf, die von einem Gehäuse 3 umgeben sind. Die Pumpe 2 weist an ihrer Unterseite ein nach unten herabhängendes Ansaugrohr 4 auf, welches dazu dient, in einen Dosiermittelbehälter 5 eingeführt zu werden, um so das Dosiermittel über die Pumpe in bekannter Weise einem zu dosierenden Medium zuzuführen.

Das Gehäuse ist über eine entsprechende Befestigungsvorrichtung 6 beispielsweise an einem Rohr befestigbar.

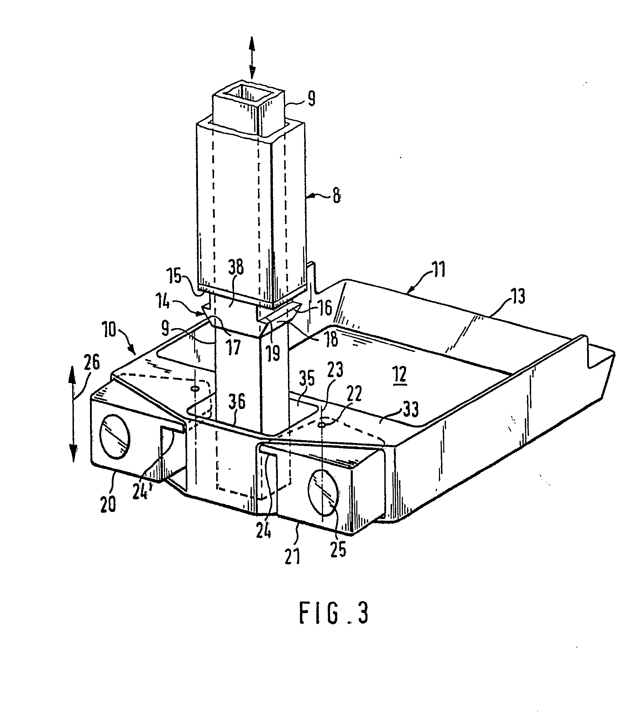

Mit dem Gehäuse 3 verbunden ist eine als Teleskopzug ausgebildete Trageinrichtung 7 vorgesehen, die sich von dem Gehäuse 3 nach unten erstreckt. Die Trageinrichtung 7 weist ein mit dem Gehäuse fest verbundenes Führungsrohr 8 und ein in diesem gleitend bewegbares Laufrohr 9 auf. An dem dem Gehäuse 3 abgewandten unteren Ende des Laufrohres 3 ist ein sich nahezu waagerecht erstreckendes Tragelement 10 vorgesehen, welches, wie am besten aus Fig. 3 ersichtlich, als eine einen Rand aufweisende konsolenförmige Schale 11 ausgebildet ist.

Die Schale 11 weist eine Tragfläche 12 auf, welche von einem nach oben hervorstehenden Rand 13 so umgeben ist, dass auf die Schale 12 tropfende Flüssigkeit von der Schale aufgefangen wird.

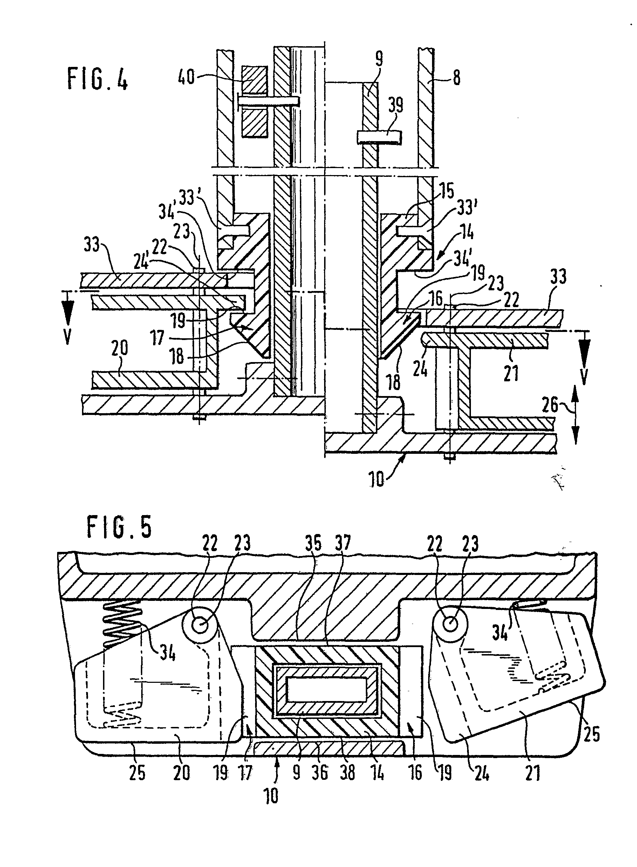

Wie am besten aus den Fig. 3 und 4 ersichtlich ist, ist an der dem Tragelement 10 zugewandten Unterseite des Führungsrohres 8 ein aus auf dem Laufrohr 9 gut gleitendem Material, vorzugsweise einem Kunststoff gebildetes Führungsteil 14 angebracht. Das Führungsteil 14 weist einen mit dem Führungsrohr 8 verbindbaren Teil 15 auf, der beispielsweise von unten in das Führungsrohr 8 eingesteckt und durch Schrauben 32 oder Klemmwirkung mit diesem verbunden gehalten wird. Gewünschtenfalls kann auch eine Verklebung erfolgen. Die Verbindung soll fest sein. An seiner Unterseite weist das Führungsteil 14 zwei zu gegenüberliegenden Seiten hervorstehende Rastnasen 16, 17 auf, die so ausgebildet sind, dass sie in der in Fig. 3 gezeigten Weise von unten nach oben zueinander von unten nach oben divergent verlaufende schräge Ebenen 18 und diese begrenzende nahezu waagerechte Arretierebenen 19 aufweisen.

Das Tragelement 10 weist auf seiner mit dem Laufrohr 9 verbundenen Seite Drücker 20, 21 auf. Der Drücker 21 ist mittels eines Stiftes 22 so mit der Wandung 33 des Tragelementes verbunden, dass er um eine parallel sich zu dem Laufrohr 9 erstreckende Achse 23 schwenkbar ist. Es ist eine Spannfeder 34 vorgesehen, die den Drücker 21 in die in Fig. 3 und in den Fig. 4 und 5 links gezeigte Arretierstellung vorspannt. An seinem dem Laufrohr 9 zugewandten oberen Ende weist der Drücker 21 eine mit der Rastnase 16 zusammenwirkende Klinke 24 auf. Die Klinke 24 ist in der in Fig. 5 gezeigten Weise so relativ zur Achse 23 angeordnet, dass bei einer Schwenkung des Drückers 21 um die Achse 23 die Klinke 24 zum Laufrohr 9 hin und von diesem weg bewegbar ist. Der Körper des Drückers ist so ausgebildet, dass er durch Druck auf eine Drückfläche 25 gegen die Federkraft so um die Achse 23 von der in den Fig. 4 und 5 links gezeigten Stellung in die jeweils rechts gezeigte Stellung schwenkbar ist, dass die Klinke 24 aus dem Eingriff mit der Rastnase 16 herausbewegt wird. Der Drücker 20 und seine Befestigung sind zu einer zwischen den beiden Drückern verlaufenden Ebene, die mit der Längsachse des Laufrohres 9 zusammenfällt, spiegelbildlich ausgebildet und angeordnet.

Die Drücker 20, 21 bilden zusammen mit den Rastnasen 16, 17 eine Zweihandverriegelung. In Fig. 3 und in den Fig. 4 und 5 rechts ist diese im entriegelten geöffneten Zustand gezeigt. Wird das Tragelement 10 in Richtung des Pfeiles 26 nach oben gegen das mit dem Gehäuse 3 ortsfest verbundene Führungsrohr 8 bewegt, dann drücken die schrägen Ebenen 18 die Drücker 20, 21 an den Klinken 24, 24' leicht nach aussen, und in der in den Fig. 4 und 5 links gezeigten Endstellung greifen die Rastnasen 16, 17 unter die Klinken 24, 24' und bilden eine Verriegelung. Die Verriegelung lässt sich nur dadurch lösen, dass gleichzeitig auf beide Drücker 20, 21 gedrückt wird, damit die Verriegelung zwischen den Klinken und den Rastnasen freigegeben wird, so dass das Tragelement 10 in Richtung des Pfeiles 26 nach unten bewegt werden kann.

In der in den Fig. 4 und 5 links gezeigten oberen Endstellung ist die Lage des Tragelementes in Verschieberichtung einerseits durch den Eingriff der Klinken 24, 24' mit den Rastnasen 16, 17 und andererseits durch das Anlegen der Wandung 33 des Tragelementes 10 an einem der Arretierebene 19 gegenüberliegenden und im wesentlichen parallel zu dieser angeordneten Anlagefläche 34 am Führungsteil 14 festgelegt. In dieser Stellung ist das Tragelement 10 gegen Verdrehen dadurch gesichert, dass, wie insbesondere aus Fig. 5 ersichtlich ist, mit der Wandung 33 verbundene parallele Führungsflächen 35, 36 mit im wesentlichen parallel zum Laufrohr angeordneten Seitenflächen 37, 38 des Führungsteiles 14 in Eingriff gelangen. Diese Seitenflächen 37, 38 sind an den zwei gegenüberliegenden Seiten des Führungsteiles 14 angeordnet, an denen keine Rastnasen 16, 17 vorgesehen sind.

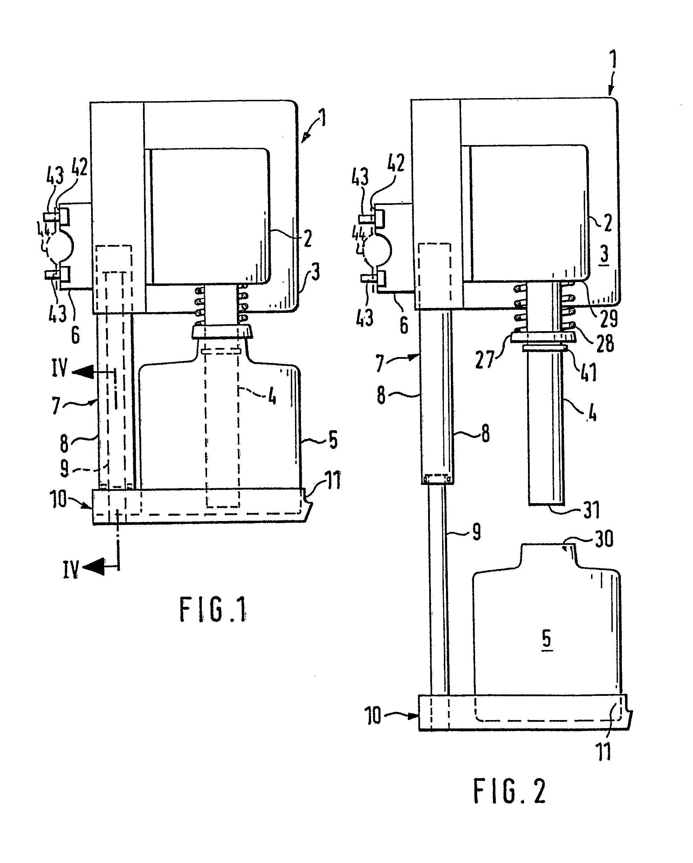

Das Laufrohr 9 und das Führungsrohr 8 sind so aneinander angepasst, dass das Laufrohr 9 nur bis zu einer in Fig. 2 gezeigten unteren Endstellung nach aussen aus dem Führungsrohr 8 herausziehbar ist. Zu diesem Zweck ist, wie im rechten Teil der Fig. 4 gezeigt ist, ein Stift 39 vorgesehen, der in der unteren Endstellung gegen die Oberseite des Führungsteiles 14 anliegt und dadurch ein weiteres Herausziehen des Laufrohres 9 verhindert. Gemäss einer anderen, in Fig. 4 links gezeigten Ausführungsform, sind am Laufrohr 9 Laufrollen 40 befestigt, über die das Laufrohr 9 im Führungsrohr 8 geführt ist. Diese Laufrollen 40 sind in einer solchen Höhe am Laufrohr 9 angeordnet, dass in der unteren Endstellung eine Laufrolle an der Oberseite des Führungsteiles 14 anliegt und damit ebenfalls ein weiteres Herausziehen des Laufrohres 9 verhindert. Gemäss einer weiteren, nicht gezeigten Ausführungsform kann das Laufrohr 9 einen oberen umgebördelten Rand aufweisen, der in der unteren Endstellung auf der Oberseite des Führungsteiles 40 aufliegt.

An dem Ansaugrohr 4 ist eine Abdeckeinrichtung 27 vorgesehen. Ferner ist eine Druckfeder 28 vorgesehen, die an ihrer einen Seite an einem Widerlager 29 anliegt und an deren anderem Ende die Abdeckeinrichtung 27 anliegt. Die Druckfeder 28 kann an dem Widerlager 29 und mit der Abdeckeinrichtung 27 beispielsweise über eine Klemm- oder Schraubverbindung verbunden sein, so dass die Abdeckeinrichtung 27 nicht nach unten fallen kann. Ferner ist ein Anschlag 41 zum Begrenzen der Bewegung der Abdeckeinrichtung 27 auf dem Ansaugrohr nach unten vorgesehen.

Zum Einsetzen eines Dosiermittelbehälters 5 wird zunächst durch Drücken auf die beiden Drücker 20, 21 die Verriegelung freigegeben und das Tragelement 10 durch Ausziehen der Teleskopverbindung nach unten in die in Fig. 2 gezeigte Stellung bewegt. Anschliessend wird der Dosiermittelbehälter 5 auf die Schale 11 aufgesetzt, und dann erfolgt ein Zurückschieben des Tragelementes 10 nach oben in die in Fig. 1 gezeigte Stellung. Dabei gelangt die Abdeckeinrichtung 27 mit dem Rand 30 des Dosiermittelbehälters 5 in Kontakt und wird durch die Druckfeder 28 zu dem Rand 30 hin so vorgespannt, dass eine einwandfreie Abdichtung erfolgt. Beim Austauschen des leeren Dosiermittelbehälters erfolgt dann wieder die Entriegelung in der oben beschriebenen Weise und das nach unten Bewegen des Tragelementes 10 in die untere Endstellung. Der Dosiermittelbehälter 5 kann von dem Tragelement abgenommen werden. Von dem Ansaugrohr 4 eventuell noch herabfallende Tropfen gelangen auf die Schale 11, so dass keine Verschmutzung des Bodens erfolgt.

Die Länge des Teleskopauszuges aus Führungsrohr 8 und Laufrohr 9 ist so gewählt, dass sich in der in Fig. 1 gezeigten arretierten oberen Endstellung das untere Ende des Ansaugrohres 4 gerade über dem Boden des Dosiermittelbehälters 5 befindet. Im ausgezogenen in Fig. 2 gezeigten Zustand soll der Abstand des oberen Randes 13 der Schale 11 von dem unteren Rand 31 des Ansaugrohres 4 wenigstens so gross sein, wie die Höhe des einzustellenden Dosiermittelbehälters 5. Gemäss einer Weiterbildung sind jeweils zwei oder eine Mehrzahl von oberen und unteren Endstellungen vorgesehen, so dass Behälter mit unterschiedlicher Höhe verwendbar sind.

Die Befestigungsvorrichtung 6 dient dazu, das Dosiergerät 1 ortsfest derart an einem Rohr oder einer Wand aufgehängt zu befestigen, dass der Raum unter dem Dosiergerät zum Wechsel des Dosiermittelbehälters 5 frei zugänglich ist und dieser Wechsel nicht durch beispielsweise ein Traggestell behindert wird. Zu diesem Zweck ist die Befestigungsvorrichtung 6 vorzugsweise als ein am Gehäuse 3 befestigter Haltebügel ausgebildet, an dessen vom Gehäuse 3 abstehenden freien Enden 42 Befestigungsschrauben 43 vorgesehen sind. Dadurch ist es auch möglich, das Dosiergerät in einer Höhe zu befestigen, in der ein Wechsel des Dosiermittelbehälters bequem möglich ist. Soll das Dosiergerät an einem Rohr aufgehängt werden, dann werden an den freien Enden 42 zusätzlich Rohrschellen 44 vorgesehen, die mittels der Befestigungsschrauben 43 mit dem Haltebügel der Befestigungsvorrichtung 6 verbunden werden.

Gemäss einer anderen Ausführungsform kann die Abdeckeinrichtung 27 zusammen mit der Druckfeder 28 auch einstückig ausgebildet sein, beispielsweise als ein Balg aus elastischem Material, vorzugsweise Gummi. Der Balg ist an seinem einen Ende mit der Unterseite der Pumpe 2 verbunden und erstreckt sich von dieser über den oberen Teil des Ansaugrohres 4 nach unten. Seine Länge ist so bemessen, dass die eine ringförmige Auflagefläche bildende Unterseite gegen den Rand 30 des Dosiermittelbehälters 5 federnd anliegt, wenn dieser sich in der dem zweiten Abstand entsprechenden Lage befindet. In diesem Fall erübrigt sich der Anschlag 41.

### Patentansprüche

1. Dosiergerät (1) mit einem in einen Dosiermittelbehälter (5) einführbaren Ansaugrohr (4) sowie einer Befestigungsvorrichtung (6) zur ortsfesten Befestigung des Dosiergerätes (1), dadurch gekennzeichnet, dass ein den Dosiermittelbehälter (5) aufnehmendes Tragelement (10) mit dem Dosiergerät (1) über eine Trageinrichtung (7) verbunden ist, deren Länge einstellbar ist.

2. Dosiergerät nach Anspruch 1, dadurch gekennzeichnet, dass die Länge der Trageinrichtung (7) auf einen ersten Wert derart, dass der Abstand von dem Tragelement (10) bis zu dem Ansaugrohr (4) wenigstens gleich der Höhe eines aufzunehmenden Dosiermittelbehälters (5) ist, und auf einen zweiten Wert derart, dass das Ansaugrohr (4) ausreichend weit in den Dosiermittelbehälter (5) hineinreicht, einstellbar ist.

3. Dosiergerät nach Anspruch 1 oder 2, dadurch gekennzeichnet, dass die Trageinrichtung (7) als Teleskopzug ausgebildet ist.

4. Dosiergerät nach einem der Ansprüche 1-3, dadurch gekennzeichnet, dass die Trageinrichtung (7) eine Verriegelung (16-24) aufweist, die derart ausgebildet ist, dass sie das Tragelement (10) in der dem zweiten Abstand entsprechenden Lage einrastend hält.

5. Dosiergerät nach Anspruch 4, dadurch gekennzeichnet, dass die Verriegelung (16-24) als Zweihandverriegelung ausgebildet ist.

6. Dosiergerät nach einem der Ansprüche 1 bis 5, dadurch gekennzeichnet, dass das Tragelement (10) als eine Schale (11) ausgebildet ist.

7. Dosiergerät nach einem der Ansprüche 2 bis 6, dadurch gekennzeichnet, dass an dem Ansaugrohr (4) eine Abdeckeinrichtung (27) derart vorgesehen ist, dass sie den Rand eines vom Tragelement (10) aufzunehmenden Dosiermittelbehälters (5) abdichtet, wenn sich das Tragelement (10) in der dem zweiten Wert der Länge der Trageinrichtung entsprechenden Lage befindet.

8. Dosiergerät nach Anspruch 7, dadurch gekennzeichnet, dass eine Druckfeder (28) vorgesehen ist, die die Abdeckeinrichtung (27) zum Tragelement (10) hin vorspannt.

9. Dosiergerät nach einem der Ansprüche 1 bis 8, dadurch gekennzeichnet, dass die Befestigungsvorrichtung (6) als ein Haltebügel zur ortsfesten Aufhängung des Dosiergerätes (1) ausgebildet ist.

### Claims

1. Dosing apparatus (1) comprising a suction tube adapted to be introduced into a container (5) for dosing agent as well as mounting means (6) for fixedly mounting the dosing apparatus (1), characterized in that a support member (10) receiving the container (5) for dosing agent is connected with the dosing apparatus (1) by means of support means (7) having an adjustable length.

2. Dosing apparatus according to claim 1, characterized in that the length of the support means (7) may be adjusted to a first value such that the distance from the support member (10) to the suction tube (4) is at least equal to the height of a container (5) for dosing agent to be received, and to a second value such that the suction tube (4) extends sufficiently far into the container (5) for dosing agent.

3. Dosing apparatus according to claim 1 or 2, characterized in that the support means (7) is formed as a telescopic support.

4. Dosing apparatus according to any of the claims 1 to 3, characterized in that the support means (7) comprises a locking mechanism (16-24) which is designed such that it latchingly supports the support member (10) in a position corresponding to the second distance.

5. Dosing apparatus according to claim 4, characterized in that the locking mechanism (16-24) is formed as a two-hand locking mechanism.

6. Dosing apparatus according to any of the claims 1 to 5, characterized in that the support member (10) is formed as a bowl (11).

7. Dosing apparatus according to any of the claims 2 to 6, characterized in that a cover means (27) is provided at the suction tube (4) such that it seals the edge of a dosing agent container (5) to be received by the support member (10) when the support member (10) is in the position corresponding to the second value of the length of the support means.

8. Dosing apparatus according to claim 7, characterized in that a compression spring (28) is provided urging the cover means (27) towards the support member (10).

9. Dosing apparatus according to any of the claims 1 to 8, characterized in that the mounting means (6) is formed as a supporting bracket for the fixed suspension of the dosing apparatus (1).

### Revendications

1. Doseur (1) muni d'un tube d'aspiration (4) pouvant être introduit dans un récipient à agent de dosage (5) ainsi que d'un dispositif de fixation (6) pour la fixation en position fixe du doseur (1), caractérisé par le fait qu'un élément porteur (10) recevant le récipient à agent de dosage (5) est relié au doseur (1) par l'intermédiaire d'un dispositif porteur (7) dont la longueur est réglable.

2. Doseur selon la revendication 1, caractérisé par le fait que la longueur du dispositif porteur (7) peut être réglée à une première grandeur, de telle sorte que la distance de l'élément porteur (10) au tube d'aspiration (4) est au moins égale à la hauteur d'un récipient à agent de dosage (5) à loger et à une deuxième grandeur de telle sorte que le tube d'aspiration (4) arrive suffisamment loin à l'intérieur du récipient à agent de dosage (5).

3. Doseur selon l'une des revendications 1 ou 2, caractérisé par le fait que le dispositif porteur (7) est conçu sous forme d'ensemble télescopique.

4. Doseur selon l'une des revendications 1 à 3, caractérisé par le fait que le dispositif porteur (7) présente un verrouillage (16 à 24) qui est conçu de telle sorte qu'il maintient l'élément porteur (10) par arrêt dans la position correspondant à la deuxième distance.

5. Doseur selon la revendication 4, caractérisé par le fait que le verrouillage (16 à 24) est conçu sous forme de verrouillage à deux mains.

6. Doseur selon l'une des revendications 1 à 5, caractérisé par le fait que l'élément porteur (10) est conçu sous la forme d'une cuvette (11).

7. Doseur selon l'une des revendications 2 à 6, caractérisé par le fait que sur le tube d'aspiration (4), un dispositif de recouvrement (27) est prévu de telle sorte qu'il rend étanche le bord d'un récipient à agent de dosage (5) devant être logé par l'élément porteur (10) quand l'élément porteur (10) se trouve dans la position correspondant à la deuxième grandeur de la longueur du dispositif porteur.

8. Doseur selon la revendication 7, caractérisé par le fait qu'il est prévu un ressort de compression (28) qui précharge le dispositif de recouvrement (27) en direction de l'élément porteur (10).

9. Doseur selon l'une des revendications 1 à 8, caractérisé par le fait que le dispositif de fixation (6) est conçu sous forme d'étrier de retenue pour la suspension du doseur (1) en position fixe.

FIG.1

FIG.2

FIG.3

FIG.4

FIG.5